Europäisches Patentamt

European Patent Office

Office européen des brevets

(11) Veröffentlichungsnummer: **0 630 944 A1**

## EUROPÄISCHE PATENTANMELDUNG

(21) Anmeldenummer: **94108655.5**

(51) Int. Cl.⁵: **C08L 95/00**

(22) Anmeldetag: **07.06.94**

(30) Priorität: **22.06.93 DE 4320616**

(43) Veröffentlichungstag der Anmeldung:
**28.12.94 Patentblatt 94/52**

(84) Benannte Vertragsstaaten:
**AT BE CH DE DK ES FR GB GR IE IT LI LU NL PT SE**

(71) Anmelder: **SICOWA Verfahrenstechnik für Baustoffe GmbH & Co. KG**
**Handerweg 17**
**D-52072 Aachen (DE)**

(72) Erfinder: **Koslowski, Thomas, Dr.Ing.**
**Am Brombeerhang 15**
**D-52072 Aachen (DE)**
Erfinder: **Kwasny-Echterhagen, Rüdiger, Dr.Ing.**
**Am Schlossteich 6**
**D-52072 Aachen (DE)**
Erfinder: **Potschka, Volker, Dr.rer.nat.**
**Siegweg 18**
**D-42579 Heiligenhaus (DE)**

(74) Vertreter: **Sparing - Röhl - Henseler**
**Patentanwälte**
**Rethelstrasse 123**
**D-40237 Düsseldorf (DE)**

(54) **Bitumenzusatzstoff.**

(57) Die Erfindung betrifft einen Bitumenzusatzstoff aus erschmolzenen und regranulierten Altkunststoffen. Um eine leichte Auflösbarkeit in Bitumen zu erreichen, ist vorgesehen, daß die Altkunststoffe aus einer im erhärteten Zustand gemahlenen Körnung mit einer Kornverteilung von 0 bis 8 mm, insbesondere bis 5 mm, bei definierter Sieblinie bestehen, wobei die einzelnen Körner eine rauhe Oberfläche besitzen.

Die Erfindung betrifft einen Bitumenzusatzstoff aus zerkleinerten Teilchen von Altkunststoffen.

Nicht sortenreine Kunststoffe aus Siedlungs- und/oder Industrieabfällen bieten hinsichtlich einer eventuellen Wiederverwertung einerseits durch die fehlende Sortenreinheit und andererseits durch das notwendige Waschen zur Beseitigung von Verunreinigungen erhebliche Schwierigkeiten, zumal auch nach dem Waschen noch Reste von Verunreinigungen wie Sand, nicht aus Kunststoff bestehende Folienstücke, Holzstücke u.dgl. zusammen mit einer entsprechenden Restfeuchtigkeit vorhanden sind.

Es wurde bereits vorgeschlagen, sortenreines, aus Abfällen stammendes Polyethylen zu waschen, zu mahlen und zu extrudieren sowie das Extrudat zu kleinen Pastillen zu zerkleinern, die dann in einer Asphaltmischanlage dem erhitzten Gestein untergemischt werden, wonach Bitumen zugemischt wird. Hierdurch werden die mechanische Verformungsfestigkeit und die Viscoelastizität des Bitumens sowie die Wärmeempfindlichkeit positiv beeinflußt. Durch das Zerkleinern des Polyethylenextrudats ergibt sich allerdings ein relativ großes, etwa linsenförmiges Einkorn mit glatter Oberfläche, das sich nur schlecht in dem Asphalt auflöst und somit entsprechend lange Mischzeiten erfordert. Abgesehen davon und aufgrund der benötigten Sortenreinheit des Polyethylens ist der Zusatz eines Additivs notwendig, um die Verträglichkeit mit dem Bitumen zu gewährleisten.

So ist es aus der EP-A-0 448 425 und der EP-A-0 447 280 bekannt, Altkunststoffe mittels einer Messermühle auf eine Teilchengröße unter 10 mm, beispielsweise auf 2 bis 4 mm zu zerkleinern, ohne daß eine vorherige Vorbehandlung stattfindet. Dementsprechend liegt keine Körnung vor, die eine Kubizität oder Sphärizität beinhaltet, sondern der Kunststoff wird lediglich in Teilchen etwa gleicher Größe zerteilt, ohne daß seine Oberfläche aufgerauht würde oder aufgerauht werden könnte. Dementsprechend ist auch nicht die Zugabe zu Bitumen an sich vorgesehen, sondern zunächst eine feuchte Zugabe und Auflösung in einem erhitzten Bitumen mit bestimmten Eigenschaften zusammen mit einem Additiv wie einem Katalysator od.dgl., wobei das so erhaltene Produkt extrudiert und granuliert wird, um dann als Bitumenzusatzstoff zu dienen und in Bitumen aufgeschmolzen zu werden.

Aufgabe der Erfindung ist es, einen Bitumenzusatzstoff der eingangs genannten Art zu schaffen, der sich leicht im Bitumen auflöst.

Diese Aufgabe wird dadurch gelöst, daß der Bitumenzusatzstoff aus einer durch Erschmelzen der zerkleinerten Teilchen und Mahlen des erhärteten Schmelzgutes hergestellten Körnung mit einer Kornverteilung von 0 bis 8 mm, vorzugsweise bis 5 mm, insbesondere bis 1,5 mm, bei definierter Sieblinie besteht, wobei die einzelnen Körner eine rauhe Oberfläche besitzen.

Dadurch, daß die Altkunststoffe aus einer im erhärteten Zustand gemahlenen Körnung mit einer Kornverteilung von 0 bis 8 mm, vorzugsweise bis 5 mm, insbesondere bis 1,5 mm, bei definierter Sieblinie bestehen, wobei die einzelnen Körner eine rauhe Oberfläche besitzen, werden die Altkunststoffe mit einem kubischen Korn ähnlich einem gebrochenen Zuschlag eingesetzt. Hierdurch sind die Altkunststoffe ohne weiteres dosier- und rieselfähig. Ferner werden die Körner im Mischgut schnell aufgeschmolzen und es läßt sich eine homogene Verteilung im Mischgut wegen der definierten Sieblinie, die auf das Mischgut (z.B. Deck-, Binder- oder Tragschicht eines Straßenbelags) abgestimmt ist, erzielen, so daß kein Additivzusatz notwendig ist. Lediglich wenn die Altkunststoffe dem Bitumen vor der Vermischung mit dem Gestein oder zu Bitumen für andere Zwecke wie für Dach- und Dichtungsbahnen oder Vergußmassen zugemischt werden, ist der Zusatz von Hilfsstoffen etwa in Form von den Kunststoff anlösenden aromatischen Verbindungen zweckmäßig. Es können nicht sortenreine Kunststoffe aus Siedlungs- und/oder Industrieabfällen wirtschaftlich in großen Mengen eingesetzt werden. Der aus derartigen Altkunststoffen bestehende Bitumenzusatzstoff, der bis zu einer Menge von etwa 10 Gew.-%, vorzugsweise bis zu 5 Gew.-%, zugesetzt werden kann, erhöht die Formstabilität und Zähigkeit von Straßenbelägen. Er verhindert ein frühes Weichwerden bei höheren Temperaturen und wirkt der Sprödigkeit bei tieferen Temperaturen entgegen.

Lediglich zerkleinerte Altkunststoffe wären dagegen aufgrund der unkontrollierten Form der einzelnen Teilchen hinsichtlich Mischbarkeit problematisch und würden zu Nesterbildung und anderen Inhomogenitäten neigen, die zu Stör- und Schwachstellen führen können, abgesehen davon, daß dann Verträglichmacher zusätzlich benötigt würden.

Die Altkunststoffe werden insbesondere als kompakte, zusammenhaltende, poröse Gebinde mit hohem Wasseraufnahmevermögen in Wasserdampfatmosphäre bei etwa 160 bis 220°C, vorzugsweise etwa 180 bis 200°C, autoklaviert und die daraus entstehenden Körper aus geschmolzenem Kunststoff zu körnigem Material vermahlen. Das Vermahlen erfolgt hierbei im erhärteten Zustand bei einer genügend tiefen Temperatur, bei der sich keine Fäden ziehen. Hierdurch wird die rauhe Oberfläche der Kunststoffkörner erzielt.

Da die Altkunststoffe aus Siedlungs- und/oder Industrieabfällen im allgemeinen sehr inhomogen sind und im geschredderten Zustand u.a. Fasern, Folienschnipsel und stückige Teilchen enthalten, werden die Altkunststoffe vorzugsweise zunächst vorzerkleinert. Dies kann mittels Schneidmühlen o.dgl. und insbesondere mit dem Ziel geschehen, die Altkunststoffe zu im wesentlichen sich verfilzenden Teilchen, etwa Schnipsel oder faserartiges Material, mit einem möglichst großen Verhältnis von Länge zu Breite und Dicke vorzumahlen.

Die Altkunststoffe können zu zusammenhaltenden Gebinden verpreßt und/oder verklebt werden, wobei das Vormahlen insbesondere das Verpressen erleichtern soll. Durch das Verpressen lassen sich aus den Altkunststoffen kompakte, zusammenhaltende Gebinde mit einem hohen Wasseraufnahmevermögen, d.h. mit einer Vielzahl von stark wassersaugenden Poren herstellen.

Beim anschließenden Autoklavieren in Wasserdampfatmosphäre bei etwa 160 bis 220°C, vorzugsweise etwa 180 bis 200°C, bei Drücken beispielsweise zwischen 5 bis 16 bar kondensiert der Wasserdampf an der zunächst noch kalten Oberfläche der Gebinde und das dadurch gebildete Kondenswasser dringt aufgrund der Kapillarwirkung der stark wassersaugenden Poren der Gebinde in letztere ein. Hierdurch erfolgt ein sehr schneller Wärmetransport über Diffusion von außen in das Innere der Gebinde. Durch diese Erwärmung wird bewirkt, daß die Kunststoffteilchen schmelzen und miteinander verschmelzen. Wenn dies geschieht, sacken die Gebinde teilweise in sich zusammen.

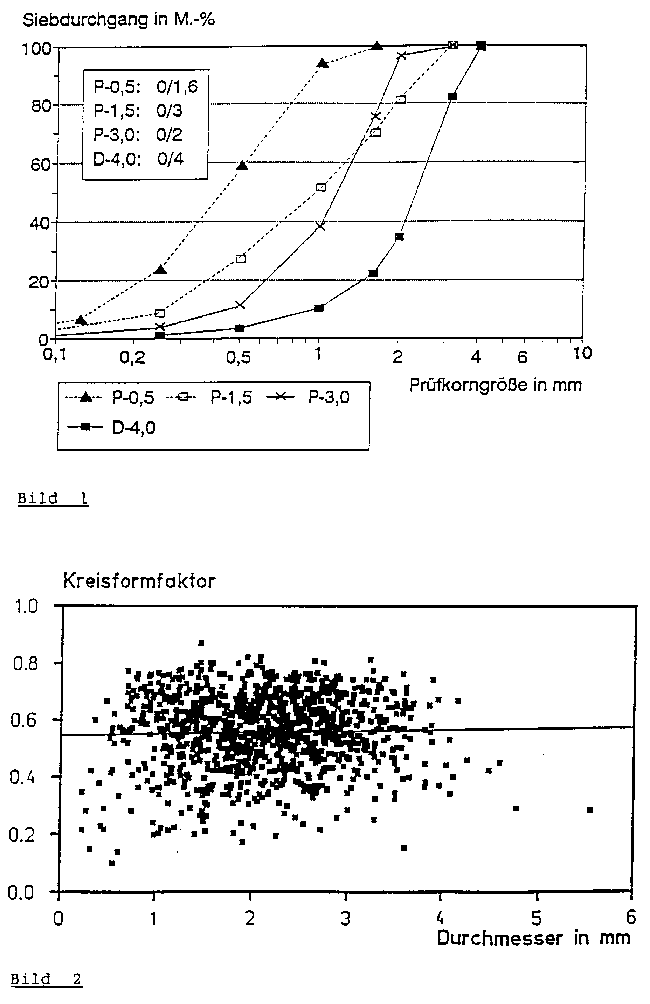

Sieblinien von auf diese Weise durch Aufschmelzen und späteres Mahlen hergestellten Bitumenzusatzstoffen sind in Bild 1 dargestellt, wobei der Siebdurchgang in Masse-% gegenüber der Prüfkorngröße in mm für vier unterschiedliche Sieblinien dargestellt ist.

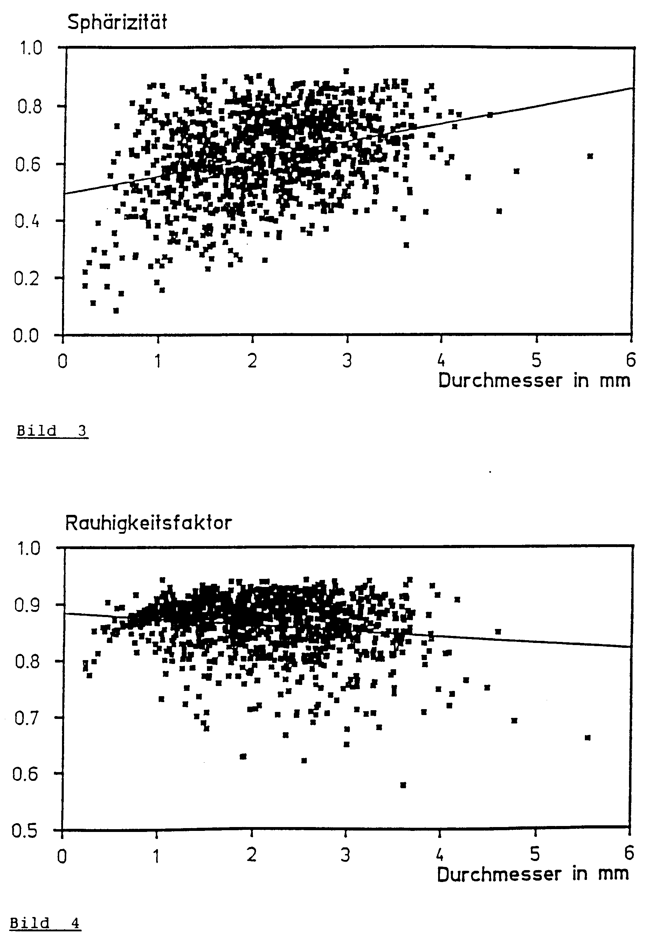

Die Bilder 2 bis 4 zeigen beispielhaft Auswertungen bildanalytischer Untersuchungen an einer durch Aufschmelzen und späteres Mahlen hergestellten Kunststoff-Körnung, gemessen an mindestens 1000 Körnern.

Bild 2 zeigt den Kreisformfaktor = 4 pi x Kornfläche/Kornumfang$^2$ aufgetragen gegenüber dem Korndurchmesser. Dieser Faktor wird für einen Kreis = 1. Je unregelmäßiger die Kornform ist, desto kleiner wird dieser Faktor. Das Streudiagramm von Bild 2 zeigt, daß die Kunststoff-Körnung eine weit gefächerte Formverteilung aufweist, die Bandbreite reicht von kreisähnlich (> 0,8) bis extrem unregelmäßig (< 0,2). Die nahezu parallel zur Abszisse verlaufende Trennlinie zeigt an, daß eine Abhängigkeit des Kreisformfaktors von der Größe der Körner nicht gegeben ist.

Bild 3 zeigt die Sphärizität = minimaler Korndurchmesser/maximaler Korndurchmesser aufgetragen gegenüber dem Korndurchmesser. Ein isometrisches Korn besitzt den Sphärizitätsfaktor 1. Je langgestreckter ein Korn ist, desto kleiner wird dieser Faktor. Die Kunststoff-Körnung erbringt hinsichtlich Sphärizität ein weit gefächertes Streudiagramm. Die in Bild 3 eingezeichnete Trendlinie läßt eine gewisse, gering ausgeprägte Abhängigkeit der Sphärizität vom Korndurchmesser erkennen.

Bild 4 zeigt den Rauhigkeitsfaktor = konvexer Umfang/Umfang aufgetragen gegenüber dem Durchmesser. Eine glatte Oberfläche erbringt einen Rauhigkeitsfaktor 1. Das in Bild 4 dargestellte Streudiagramm zeigt, daß die Körnung bezüglich des Rauhigkeitsfaktors weniger stark streut als bezüglich der anderen Formfaktoren.

Es lassen sich Splittmastixasphalte herstellen, beispielsweise SMA 0/11 S aus

6,8 Masse-% Bitumen 65
bis 1 Masse% körnige Altkunststoffe, z.B. mit einer Sieblinie entsprechend Bild 1, Körnung P-0,5
Rest Mischgut bestehend aus 75,4 Masse-% Splitt (2/11)
13,5 Masse-% Sand
11,1 Masse-% Füller
bei einem Verhältnis Brechsand/Natursand von 2:1 Masseteile, oder SMA 0/5 aus

7,3 Masse-% Bitumen B80
bis 1 Masse% körnige Altkunststoffe, z.B. mit einer Sieblinie entsprechend Bild 1, Körnung P-0,5
Rest Mischgut bestehend aus 62,4 Masse-% Splitt (2/5)
27,0 Masse-% Sand
10,6 Masse-% Füller
bei einem Verhältnis Brechsand/Natursand von 2:1 Masseteile.

Bei der Verwendung des körnigen Kunststoffs zur Herstellung von Splittmastixasphalt erübrigt sich ein wesentlicher Anteil der als stabilisierend wirkenden Cellulosefasern. Bei feinen Mischgutsorten wie z.B. SMA 0/5 wird die stabilisierende Wirkung (Wärmestandfestigkeit) allein durch die Kunststoffkörnung erzielt.

Beispielhaft sei auch die Herstellung eines Asphaltbinders 0/16 angegeben, bestehend aus

4,5 Masse-% Bitumen B65
bis 5 Masse% körnige Altkunststoffe, z.B. mit einer der in Bild 1 dargestellten Körnungen
Rest Mischgut bestehend aus 66,5 Masse-% Splitt (2/16)
27,1 Masse-% Sand
6,4 Masse-% Füller
bei einem Verhältnis Brechsand/Natursand von 2:1 Masseteile.

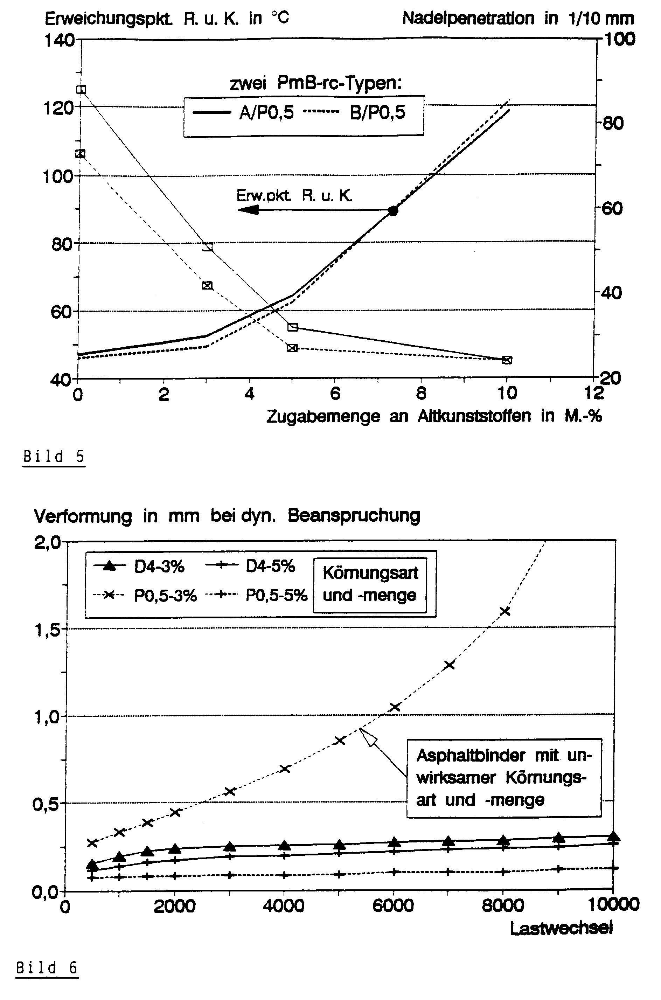

Bei Asphaltbindern mit körnigem Kunststoffzusatz hergestellt ergibt sich eine deutliche Verbesserung des langzeitigen Verformungswiderstandes bei dynamischer Beanspruchung, wie Bild 6 für verschiedene Körnungsarten und -mengen zeigt.

Bild 5 zeigt ein Diagramm, in dem der Erweichungspunkt und die Nadelpenetration von durch Zusatz von körnigem Kunststoff polymermodifiziertem Bitumen (PmB) der Viskositätsklasse B80 unterschiedlicher Rohölprovinienz (A Venezuela, B Mittelost) gegenüber der Zugabemenge an Altkunststoffen in Masse-% für den Körnungstyp P0,5 (sh. Bild 1) aufgetragen ist.

**Patentansprüche**

1.  Bitumenzusatzstoff aus zerkleinerten Teilchen von Altkunststoffen, dadurch **gekennzeichnet,** daß er aus einer durch Erschmelzen der zerkleinerten Teilchen und Mahlen des erhärteten Schmelzgutes hergestellten Körnung mit einer Kornverteilung von 0 bis 8 mm, vorzugsweise bis 5 mm, insbesondere bis 1,5 mm, bei definierter Sieblinie besteht, wobei die einzelnen Körner eine rauhe Oberfläche besitzen.

2.  Bitumenzusatzstoff nach Anspruch 1, dadurch gekennzeichnet, daß die Sieblinie feingestuft ist.

3.  Bitumenzusatzstoff nach Anspruch 1 oder 2, dadurch gekennzeichnet, daß er in einer Menge von bis zu 10 Masse-%, insbesondere 5 Masse-%, des Bitumen als Bindemittel enthaltenden Mischguts zugesetzt wird.

4.  Bitumenzusatzstoff nach einem der Ansprüche 1 bis 3, dadurch gekennzeichnet, daß die Körner aus Altkunststoffen einen Kreisformfaktor im wesentlichen im Bereich von 0,8 bis 0,4 aufweisen.

5.  Bitumenzusatzstoff nach einem der Ansprüche 1 bis 4, dadurch gekennzeichnet, daß die Körner aus Altkunststoffen eine Sphärizität im wesentlichen im Bereich von 0,8 bis 0,4 aufweisen.

6.  Bitumenzusatzstoff nach einem der Ansprüche 1 bis 5, dadurch gekennzeichnet, daß die Körner aus Altkunststoffen einen Rauhigkeitsfaktor im wesentlichen im Bereich von 0,8 bis 0,95 aufweisen.

7.  Bitumenzusatzstoff nach einem der Ansprüche 1 bis 6, dadurch gekennzeichnet, daß die Körner aus Altkunststoffen durch Schmelzen von saugfähigen Gebinden aus Altkunststoffen in der Wasserdampfatmosphäre eines Autoklaven und Mahlen nach entsprechendem Abkühlen hergestellt sind.

Siebdurchgang in M.-%

Bild  1

Kreisformfaktor

Bild  2

5

## Sphärizität

Bild 3

## Rauhigkeitsfaktor

Bild 4

**Erweichungspkt. R. u. K. in °C** **Nadelpenetration in 1/10 mm**

zwei PmB-rc-Typen:

——— A/P0,5 ········ B/P0,5

Erw.pkt. R. u. K.

Zugabemenge an Altkunststoffen in M.-%

Bild 5

**Verformung in mm bei dyn. Beanspruchung**

▲ D4-3%   + D4-5%   | Körnungsart
✕ P0,5-3%   + P0,5-5%  | und -menge

Asphaltbinder mit unwirksamer Körnungsart und -menge

Lastwechsel

Bild 6

7

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | FR-A-2 152 090 (P. HABERL) <br> * das ganze Dokument * <br> --- | 1-7 | C08L95/00 |
| D,X | EP-A-0 448 425 (I.F.P.) <br> * das ganze Dokument * <br> --- | 1-7 | |
| D,X | EP-A-0 447 280 (I.F.P.) <br> * das ganze Dokument * <br> ----- | 1-7 | |

| RECHERCHIERTE SACHGEBIETE (Int.Cl.5) |
|---|
| C08L |

Der vorliegende Recherchenbericht wurde für alle Patentansprüche erstellt

| Recherchenort | Abschlußdatum der Recherche | Prüfer |
|---|---|---|
| DEN HAAG | 21. September 1994 | Leroy, A |